# EUROPÄISCHE PATENTSCHRIFT

(11) **EP 3 595 958 B1**
(45) Veröffentlichungstag und Bekanntmachung des Hinweises auf die Patenterteilung: **26.01.2022**
(21) Anmeldenummer: 18713576.9
(22) Anmeldetag: 13.03.2018
(51) Int. Cl.: B62D 6/00

(54) **SCHÄTZUNG DER ZAHNSTANGENKRAFT IN EINEM STEER-BY-WIRE SYSTEM**
ESTIMATING THE RACK FORCE IN A STEER-BY-WIRE SYSTEM
ÉVALUATION DE LA FORCE DE CRÉMAILLÈRE DANS UN SYSTÈME DE DIRECTION À COMMANDE ÉLECTRIQUE DE TYPE STEER-BY-WIRE

(30) Priorität: 14.03.2017 DE 102017105370
(43) Veröffentlichungstag der Anmeldung: 22.01.2020
(73) Patentinhaber: thyssenkrupp Presta AG, 9492 Eschen (LI); thyssenkrupp AG, 45143 Essen (DE)
(72) Erfinder: ROHRMOSER, Manuel, 6712 Thüringen (AT)
(74) Vertreter: thyssenkrupp Intellectual Property GmbH
(86) Internationale Anmeldenummer: PCT/EP2018/056145
(87) Internationale Veröffentlichungsnummer: WO 2018/167005

(56) Entgegenhaltungen:
- EP-A1- 1 939 066
- DE-A1-102014 205 321
- DE-A1-102014 211 815
- KR-B1- 101 694 763

## Beschreibung

Die vorliegende Erfindung betrifft ein Verfahren zur Bestimmung einer Zahnstangenkraft für ein Steer-by-Wire-Lenksystem eines Kraftfahrzeuges mit den Merkmalen des Oberbegriffs des Anspruchs 1 und ein Verfahren zur Steuerung eines Steer-by-Wire-Lenksystems mit den Merkmalen des Oberbegriffs des Anspruchs 11, sowie ein Steer-by-Wire-Lenksystem mit den Merkmalen des Oberbegriffs des Anspruchs 13.

Bei Steer-by-Wire-Lenksystemen ist die Stellung der gelenkten Räder nicht direkt mit dem Lenkeingabemittel, beispielsweise einem Lenkrad, gekoppelt. Es besteht eine Verbindung zwischen dem Lenkrad und den gelenkten Rädern über elektrische Signale. Der Fahrerlenkwunsch wird von einem Lenkwinkelsensor abgegriffen, und in Abhängigkeit von dem Fahrerlenkwunsch wird über einen Lenksteller die Stellung der gelenkten Räder geregelt. Eine mechanische Verbindung zu den Rädern ist nicht vorgesehen, sodass nach Betätigung des Lenkrads keine unmittelbare Kraft-Rückmeldung an den Fahrer übermittelt wird. Allerdings ist eine entsprechend angepasste Rückmeldung, beispielsweise beim Parken oder bei einer Geradeausfahrt, bei der ein der Fahrzeugreaktion angepasstes, je nach Fahrzeughersteller unterschiedliches Lenkmoment als Kraft-Rückmeldung gewünscht ist, vorgesehen. Bei einer Kurvenfahrt wirken Reaktionskräfte als Querkräfte auf das Lenkgetriebe, welche der Feedback-Aktuator in Form eines der Lenkrichtung entgegengesetzten Moments nachbildet. Der Fahrer erfährt ein dadurch vorgebbares Lenkgefühl. Um bei Steer-by-Wire-Lenkungen die Rückwirkungen der Straße auf das Lenkrad zu simulieren, ist es notwendig, am Lenkrad oder der Lenksäule einen Feedback-Aktuator (FBA) vorzusehen, welcher in Abhängigkeit von den gewünschten Rückwirkungen der Lenkhandhabe ein Lenkgefühl aufprägt.

Herkömmlicherweise werden die Rückmeldungseigenschaften der Lenkung durch die Zahnstangenkraft bestimmt, die von den Spurstangen, welche über das Fahrwerk an die Räder angebunden sind, auf die Zahnstange wirkt. Die Zahnstangenkraft wird maßgeblich von den aktuellen Seitenführungskräften beeinflusst. Damit entspricht ein wesentlicher Teil der aktuellen Zahnstangenkraft einer Querbeschleunigung. Die Zahnstangenkraft wird aber nicht nur durch die während des Durchfahrens einer Kurve auftretenden Seitenkräfte bestimmt, sondern es hat eine Vielzahl von weiteren Größen einer aktuellen Fahrsituation einen Einfluss auf die Zahnstangenkraft. Ein Beispiel hierfür ist die Fahrbahnbeschaffenheit (Unebenheiten, Spurrillen, Reibwert).

Es ist bei elektrischen Servolenkungen (EPS) bekannt, die aktuell anliegende Zahnstangenkraft mittels eines an der Zahnstange angeordneten Momentensensors oder durch Schätzung mittels eines auf einem Modell des Lenksystems beruhenden sogenannten Beobachters zu ermitteln. Ein solches Verfahren ist beispielsweise in der Offenlegungsschrift DE 103 320 23 A1 offenbart. Dort wird zur Bestimmung eines Lenkmoments für das EPS Lenksystem eines Fahrzeugs das Lenkmoment in Abhängigkeit von der an gelenkten Rädern auftretenden Seitenkraft oder in Abhängigkeit von dem Ist-Lenkmoment bestimmt. Das bekannte Verfahren sieht vor, die Seitenkraft mittels eines Sensors oder auf Grundlage eines Modells der Lenkung des Fahrzeugs in Abhängigkeit von mindestens einer der Größen Querbeschleunigung, Lenkwinkel und Fahrzeuggeschwindigkeit zu schätzen oder zu modellieren.

Als nachteilig erweist sich dieses Modell, da es weitere Störeinflüsse, wie beispielsweise Fahrbahngegebenheiten, nicht berücksichtigt und daher nicht die gewünschte Genauigkeit aufweist. Weiterhin kann eine Zahnstangenkraft nicht geschätzt werden, wenn das Getriebe nicht bewegt wird und sich die Zahnstangenkraft innerhalb der Haftreibung befindet.

Aus DE 10 2014 211 815 A1 ist ein gattungsgemäßes Steer-by-Wire-Lenksystem bekannt, in dem eine Wechselgröße als Differenz zwischen einer Ist-Zustandsgröße und einer Soll-Zustandsgröße des Lenksystems ermittelt wird und der Lenkradaktuator basierend auf einem zur Eliminierung eines enthaltenen Gleichanteils gefilterten Filterausgangssignal der Wechselgröße und/oder der Ist-Zustandsgröße angesteuert wird.

KR 10-1694763 B1 betrifft eine Lenksteuervorrichtung mit einer Zahnstangenkraftschätzeinheit, die eine Zahnstangenkraft basierend auf mindestens einem Winkel, dem Säulendrehmoment und dem Motorstrom eines Ritzels schätzt.

DE 10 2014 205 321 A1 beschreibt eine Lenkvorrichtung in einem Kraftfahrzeug mit einer Zahnstange und einer Recheneinheit, wobei die Recheneinheit ein Modul zur Schätzung einer Zahnstangenkraft und ein Achsmodel aufweist, wobei das Achsmodel eine Störkraft aufgrund von Torquesteer-Momenten ermittelt, die bei der Schätzung der Zahnstangenkraft berücksichtigt wird.

Es ist deshalb Aufgabe der vorliegenden Erfindung, ein Verfahren zur Bestimmung einer Zahnstangenkraft für ein Steer-by-Wire-Lenksystem eines Kraftfahrzeuges und ein Verfahren zur Steuerung eines Steer-by-Wire-Lenksystems für Kraftfahrzeuge anzugeben, die eine genauere Bestimmung der Zahnstangenkraft erlauben und somit ein verbessertes Lenkgefühl ermöglichen und gleichzeitig störungsarm ausgebildet sind. Weiter soll ein Steer-by-Wire-Lenksystem angegeben werden, dass ein verbessertes Lenkverhalten ermöglicht.

Diese Aufgabe wird von einem Verfahren zur Bestimmung einer Zahnstangenkraft für ein Steer-by-Wire-Lenksystem eines Kraftfahrzeuges mit den Merkmalen des Anspruchs 1, einem Verfahren zur Steuerung eines Steer-by-Wire-Lenksystems für Kraftfahrzeuge mit den Merkmalen des Anspruchs 12 und einem Steer-by-Wire-Lenksystems für Kraftfahrzeuge mit den Merkmalen des Anspruchs 14 gelöst. In den Unteransprüchen sind vorteilhafte Weiterbildungen der Erfindung genannt.

Demnach ist ein Verfahren zur Bestimmung einer Zahnstangenkraft für ein Steer-by-Wire-Lenksystem für ein Kraftfahrzeug, wobei die Zahnstangenkraft aus zwei Komponenten ermittelt wird, vorgesehen, wobei in einem Modul zur fahrzeugmodellbasierten Schätzung der Zahnstangenkraft mittels eines Fahrzeugmodells eine erste Komponente der Zahnstangenkraft erzeugt wird und in einem Modul zur lenkgetriebemodellbasierten Schätzung der Zahnstangenkraft mittels eines Lenkgetriebemodells eine zweite Komponente der Zahnstangenkraft erzeugt wird. Auf diese Weise wird die Qualität der Rückmeldung von der Straße an den Fahrer und damit das Lenkgefühl eines erfindungsgemäß ausgestalteten Steer-by-Wire-Systems deutlich verbessert, denn die Nachteile der einzelnen Methoden können durch die jeweils andere Methode kompensiert werden. Durch die Kombination aus beiden Schätzmodellen kann insgesamt eine genauere Schätzung der aktuellen Zahnstangenkraft sichergestellt und dem Fahrzeugführer damit auf das Lenkeingabemittel eine bessere und stabilere Rückmeldung bereitgestellt werden. Des Weiteren kann die Zahnstangenkraft auch bei stillstehendem Getriebe oder bei geringen Bewegungen des Getriebes innerhalb der Haftreibung geschätzt werden.

Vorzugsweise werden die beiden Komponenten der Zahnstangenkraft zu einer Zahnstangenkraft kombiniert und gewichtet, wobei die Gewichtung der beiden Komponenten in Abhängigkeit von Fahrbedingungen erfolgt. Es ist bevorzugt, wenn die Gewichtung über Kovarianzmatrizen erfolgt, so kann für die jeweilige Fahrbedingung die bestmögliche Schätzung erreicht werden.

In einer bevorzugten Ausführungsform weist das Modul zur fahrzeugmodellbasierten Schätzung der Zahnstangenkraft ein nichtlineares Fahrzeugmodell auf. Dabei ist es vorteilhaft, wenn die nicht messbaren Zustände, insbesondere die laterale Geschwindigkeit und der laterale Reifenschlupfwinkel mit Hilfe eines Kalman Filters geschätzt werden. Weiterhin vorteilhaft ist es, wenn das nichtlineare Fahrzeugmodell ein lineares Einspurmodell mit einem Reifenlastmodell und einem nichtlinearen Reifenmodell umfasst, anhand derer die laterale Reifenkraft unter Berücksichtigung der Rückstellmomente bestimmt wird.

Das Modul zur lenkgetriebemodellbasierten Schätzung der Zahnstangenkraft kann in einer ersten Ausführungsform ein nichtlineares Lenkgetriebemodell mit einer separaten Reibungsmodellierung aufweisen, wobei mittels eines Schätzers die reibungsabhängige lenkgetriebemodellbasierte Zahnstangenkraft ermittelt wird. Durch das Reibungsmodell ist es möglich, das reale Verhalten des Lenkgetriebes in die Schätzung einzubeziehen.

In einer weiteren Ausführungsform ist vorgesehen, dass ein Schätzer mit nichtlinearen Schätzmethoden arbeitet und/oder ein Reibmodell einer Reibungsmodellierung ein statisches oder asymmetrisches, modifiziertes dynamisches Reibmodell ist. Bevorzugt arbeitet der Schätzer mit nichtlinearen Schätzmethoden, wobei dabei ein Extended Kalman Filter (EKF) oder ein Unscented Kalman Filter (UKF) verwendet wird, und das Reibmodell ein Lund-Grenoble Reibmodell ist.

Bevorzugt basiert der Schätzer auf einem linearen Kalman Filter mit Reibungskompensation, wobei der nicht lineare Teil des Models als Kompensationsglied ausgeführt wird. In einer dritten Ausführungsform weist das Modul zur lenkgetriebemodellbasierten Schätzung der Zahnstangenkraft eine modellbasierte Parameterschätzung auf, wobei das Reibungsverhalten des Lenkgetriebes online ermittelt wird, was eine adaptive Schätzung der reibungsabhängigen lenkgetriebemodellbasierte Zahnstangenkraft ermöglicht. Das Modell wird dabei stets aktualisiert, was die Schätzung der lenkgetriebemodellbasierten Zahnstangenkraft unabhängig von mechanischen Veränderungen des Lenkgetriebes macht.

Weiterhin ist ein Verfahren zur Steuerung eines Steer-by-Wire-Lenksystems für ein Kraftfahrzeug vorgesehen, umfassend:
- einen auf die gelenkten Räder wirkenden elektronisch regelbaren Lenksteller,
- eine Ansteuereinheit,
- einen Feedback-Aktuator, der über ein Lenkeingabemittel von einem Fahrer mit einem Fahrerwunsch für einen Lenkwinkel beaufschlagt werden kann und ein Feedback-Signal an das Lenkeingabemittel als Reaktion auf den Fahrerwunsch und einen Fahrzustand des Kraftfahrzeugs ausgibt,
- eine Signalübertragung, die den Fahrerwunsch an die Ansteuereinheit übermittelt,
- wobei die Ansteuereinheit den Lenksteller ansteuert, um den Fahrerwunsch in eine Auslenkung der gelenkten Räder zu transformieren, wobei
das Feedback-Signal in Abhängigkeit einer geschätzten Zahnstangenkraft erfolgt, und wobei die Zahnstangenkraft mittels eines zuvor beschriebenen Verfahrens geschätzt wird.

Dabei ist es bevorzugt, wenn aus der Differenz der lenkgetriebemodellbasierten Zahnstangenkraft und der fahrzeugmodellbasierten Zahnstangenkraft die aktuelle Straßenreibung bestimmt wird, und diese als Input für das Modul zur fahrzeugmodellbasierten Schätzung der Zahnstangenkraft verwendet wird. Dadurch lässt sich eine hohe Schätzgenauigkeit der fahrzeugmodellbasierten Schätzung unabhängig von den aktuellen Straßenbedingungen gewähren.

Weiterhin ist ein entsprechendes Steer-by-Wire-Lenksystem für ein Kraftfahrzeug vorgesehen, das dazu eingerichtet ist, ein zuvor beschriebenes Verfahren auszuführen.

Bevorzugte Ausführungsformen der Erfindung werden nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung eines Steer-by-Wire-Lenksystems,
- Fig. 2:: ein Blockdiagramm einer Steuerung des Steer-by-Wire-Lenksystems mit einem Modul zur Bestimmung der Zahnstangenkraft,
- Fig. 3:: ein Blockdiagramm des Moduls zur Bestimmung der Zahnstangenkraft mit einem Modul zur lenkgetriebemodellbasierten Schätzung der Zahnstangenkraft und einem Modul zur fahrzeugmodellbasierten Schätzung der Zahnstangenkraft,
- Fig. 4:: ein weiteres Blockdiagramm des Moduls zur Bestimmung der Zahnstangenkraft mit einem Modul zur fahrzeugmodellbasierten Schätzung der Zahnstangenkraft und einem Modul zur lenkgetriebemodellbasierten Schätzung der Zahnstangenkraft
- Fig. 5:: ein Blockdiagramm eines ersten Moduls zur lenkgetriebemodellbasierten Schätzung der Zahnstangenkraft,
- Fig. 6:: ein Blockdiagramm eines zweiten Moduls zur lenkgetriebemodellbasierten Schätzung der Zahnstangenkraft,
- Fig. 7:: ein Blockdiagramm eines dritten Moduls zur lenkgetriebemodellbasierten Schätzung der Zahnstangenkraft mit einem modellbasierten Parameterschätzer, sowie
- Fig. 8:: ein Blockdiagramm eines Moduls zur fahrzeugmodellbasierten Schätzung der Zahnstangenkraft.

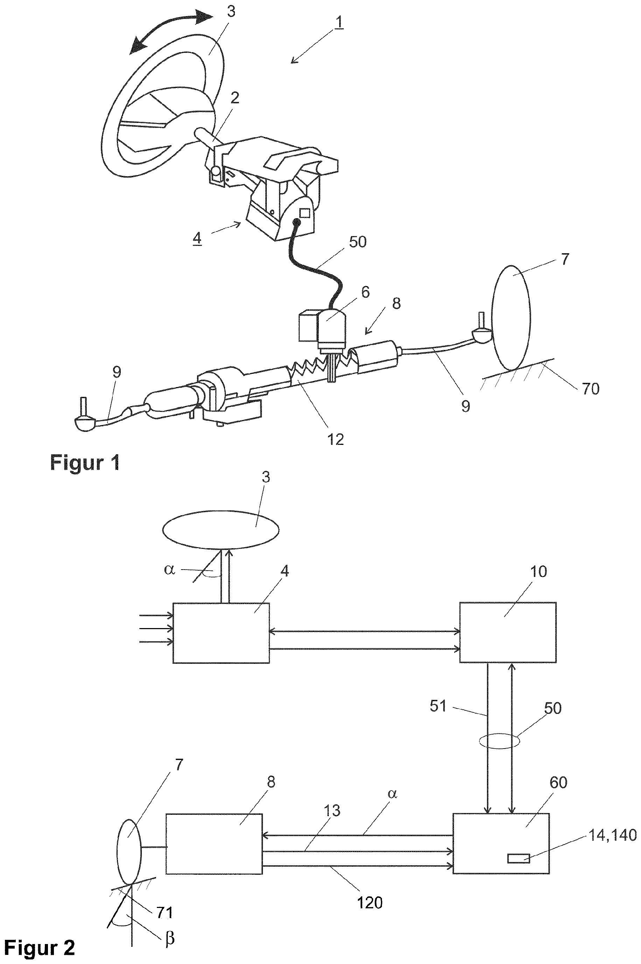

In der Figur 1 ist ein Steer-by-Wire-Lenksystem 1 gezeigt. An einer Lenkwelle 2 ist ein nicht dargestellter Drehwinkelsensor angebracht, welcher das durch Drehen eines Lenkeingabemittels 3, welches im Beispiel als Lenkrad ausgebildet ist, aufgebrachten Fahrerlenkwinkel erfasst. Es kann aber zusätzlich auch ein Lenkmoment erfasst werden. Als Lenkeingabemittel kann ein Joy-Stick dienen. Des Weiteren ist an der Lenkwelle 2 ein Feedback-Aktuator 4 angebracht, welcher dazu dient, die Rückwirkungen von der Fahrbahn 71 auf das Lenkrad 3 zu simulieren und somit dem Fahrer eine Rückmeldung über das Lenk- und Fahrverhalten des Fahrzeugs zu geben. Der Fahrerlenkwunsch wird über den vom Drehwinkelsensor gemessenen Drehwinkel α der Lenkwelle 2 über Signalleitungen an eine Feedback-Aktuator-Monitoreinheit 10 übertragen, wie dies in der Figur 2 veranschaulicht ist. Die Feedback-Aktuator-Monitoreinheit 10 überträgt den Fahrerlenkwunsch an die Ansteuereinheit 60.

Die Feedback-Aktuator-Monitoreinheit 10 übernimmt bevorzugt auch die Ansteuerung des Feedback-Aktuators 4. Die Feedback-Aktuator-Monitoreinheit 10 kann auch integral mit der Ansteuereinheit 60 ausgebildet sein. Die Ansteuereinheit 60 steuert in Abhängigkeit von dem Signal des Drehwinkelsensors sowie weiteren Eingangsgrößen einen elektrischen Lenksteller 6 an, welcher die Stellung der gelenkten Räder 7 steuert. Der Lenksteller 6 wirkt über ein Lenkstangen-Lenkgetriebe 8, wie beispielsweise einem Zahnstangen-Lenkgetriebe, sowie über Spurstangen 9 und anderen Bauteilen mittelbar auf die gelenkten Räder 7.

Figur 2 zeigt eine Steuerung des Feedback-Aktuators 4. Der Feedback-Aktuator 4 empfängt Signale über die Signalleitung 50 unter anderem von dem Drehwinkelsensor, der den Lenkwinkel a, die Lenkwinkelbeschleunigung und die Lenkwinkelgeschwindigkeit misst und speichert. Der Feedback-Aktuator 4 kommuniziert mit einer Feedback-Aktuator-Monitoreinheit 10, die den Feedback-Aktuator 4 steuert. Die Feedback-Aktuator-Monitoreinheit 10 empfängt von einer Ansteuereinheit 60 des Lenkstellers 6 den Ist-Radlenkwinkel β der gelenkten Räder 7, sowie weitere Größen, die die Ansteuereinheit 60 ermittelt hat. Die an einer Zahnstange 12 gemessene Zahnstangenposition 120 und weitere Fahrbahninformationen 13 werden an die Ansteuereinheit 60 weiter gegeben. Die Ansteuerungseinheit 60 weist ein Modul zur Bestimmung der Zahnstangenkraft 14 auf. Die geschätzte Zahnstangenkraft wird an die Feedback-Aktuator-Monitoreinheit 10 weiter gegeben, die basierend auf der Zahnstangenkraft den Feedback-Aktuator 4 ansteuert und somit ein Lenkgefühl erzeugt. Die Ansteuerungseinheit 60 empfängt weiterhin fahrerseitige Lenkbefehle 51, wie den Lenkwinkelstatus.

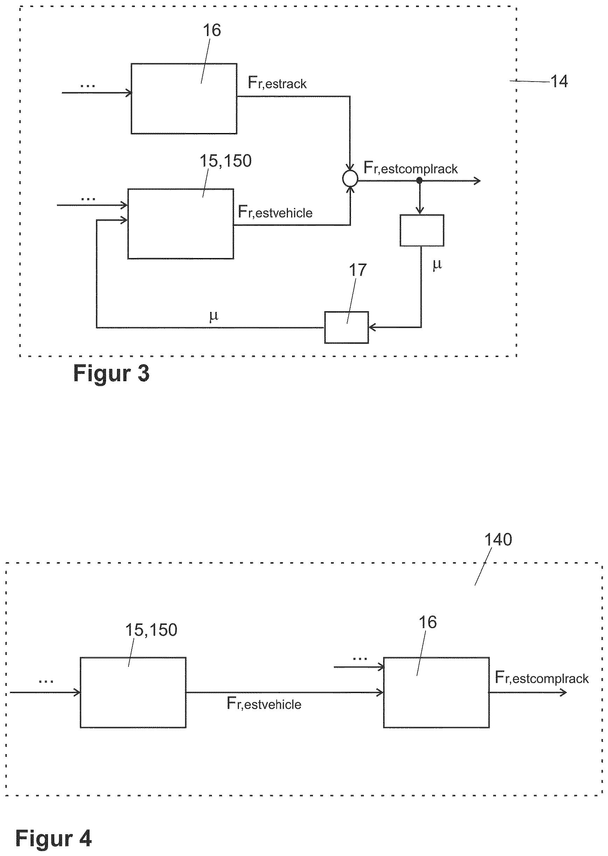

In Figur 3 ist das Modul zur Bestimmung der Zahnstangenkraft 14 umfassend ein Modul 15 zur fahrzeugmodellbasierten Schätzung der Zahnstangenkraft und ein Modul zur lenkgetriebemodellbasierten Schätzung 16 der Zahnstangenkraft dargestellt. Das Modul zur fahrzeugmodellbasierten Schätzung der Zahnstangenkraft 15 weist ein Fahrzeugmodell 150 auf, in dem Fahrbahninformationen implementiert sind. Das Modul zur lenkgetriebemodellbasierten Schätzung der Zahnstangenkraft 16 schätzt die Zahnstangenkraft basierend auf Zahnstangeninformationen (z. B. der Zahnstangen-Position).Das Modul 16 ist unabhängig von Fahrbahninformationen. Zur Bestimmung der Zahnstangenkraft F_{r,estcomplrack} wird eine Differenz aus der lenkgetriebemodellbasierten Zahnstangenkraft F_{r,estrack} und der fahrzeugmodellbasierten Zahnstangenkraft F_{r,estvehicle} gebildet. Aus der Differenz der beiden Werte ergibt sich die aktuelle Straßenreibung µ, die nach Durchlaufen einer Verzögerungseinheit 17 als Input für das Modul zur fahrzeugmodellbasierten Schätzung der Zahnstangenkraft 15 verwendet wird. Damit unterstützt die lenkgetriebemodellbasierte Schätzung die fahrzeugmodellbasierte Schätzung der Zahnstangenkraft.

In Figur 4 ist ein alternatives Modul 140 zur Bestimmung der Zahnstangenkraft F_{r,estcomplrack}, dargestellt. Hierbei wird die fahrzeugmodellbasierte Schätzung der Zahnstangenkraft F_{r,estvehicle} um die lenkgetriebemodellbasierte Zahnstangenkraft F_{r,estrack} erweitert und in Abhängigkeit des Fahrzustandes durch Gewichtungsmatrizen gewichtet und kombiniert. Dadurch kann beispielsweise während einer Kurvenfahrt, wenn das Fahrzeug mit einem konstanten Lenkwinkel β gelenkt wird, sodass keine Bewegung an der Zahnstange erfolgt und die Zahnstangenkräfte innerhalb des Haftreibungsbandes des Lenkbetriebes liegen, die Zahnstangenkraft dennoch F_{r,estcomplrack} geschätzt werden. Damit unterstützt die fahrzeugmodellbasierte Schätzung die lenkgetriebemodellbasierte Schätzung.

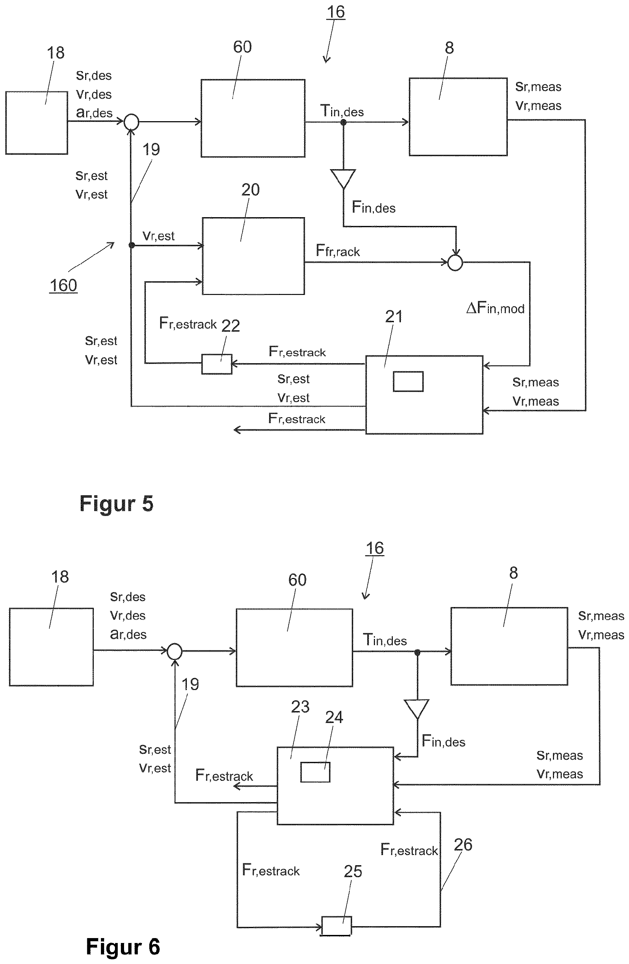

Weiterhin ist es auch denkbar und möglich beide Module 14, 140 miteinander zu kombinieren und in Abhängigkeit von den Fahrbedingungen und Erfordernissen für den jeweiligen Fall anzuwenden.Figur 5 zeigt eine Ausführungsform eines Moduls zur lenkgetriebemodellbasierten Schätzung der Zahnstangenkraft 16 mit einem nichtlinearen Lenkgetriebemodell 160. Die Ansteuereinheit 60 empfängt von einer Einheit 18 Soll-Zahnstangenwerte als Input. Diese umfassen die Soll-Zahnstangenposition s_{r,des}, die Soll-Zahnstangengeschwindigkeit v_{r,des} und die Soll-Zahnstangenbeschleunigung a_{r, des}. Die Ansteuereinheit 60 bestimmt aus dem Input s_{r,des}, v_{r,des}, a_{r,des} ein Soll-Drehmoment T_{in,des} für die Ansteuerung des Lenkgetriebes 8. Das Soll-Drehmoment T_{in,des} wird in eine Soll-Zahnstangenkraft F_{in,des} umgerechnet. Die Ist-Zahnstangenposition s_{r,meas} und die Ist-Zahnstangengeschwindigkeit V_{r,meas} werden gemessen und als Input für einen Schätzer 21 verwendet. Eine separate Reibungsmodellierung 20 ermittelt anhand einer mittels des Schätzers 21 geschätzten Geschwindigkeit der Zahnstange v_{r,est} und einer reibungsabhängigen lenkgetriebemodellbasierten Zahnstangenkraft F_{r,estrack}, welche ebenfalls durch den Schätzer 21 bestimmt wird, ine Reibungskraft F_{fr,rack}. Diese Reibungskraft F_{fr,rack} wird mit der Soll-Zahnstangenkraft F_{in,des} verrechnet und die Differenz beider Zahnstangenkraftkomponenten ΔF_{in,mod} bildet das Resultat, welches als Input für den Schätzer 21 verwendet wird, der zusätzlich die gemessene Zahnstangenposition s_{r,meas} und die gemessene Zahnstangengeschwindigkeit v_{r,meas} als Input erhält. Der Schätzer 21 bestimmt die reibungsabhängige lenkgetriebemodellbasierte Zahnstangenkraft F_{r,estrack} und gibt diese nach Durchlaufen einer Verzögerungseinheit 22 an das Reibungsmodell 20 als Input weiter, da die Reibung des Getriebes von der Zahnstangenkraft abhängig ist. Der Schätzer 21 bestimmt weiterhin die geschätzte Zahnstangenposition s_{r,est} und die geschätzte Zahnstangengeschwindigkeit v_{r,est}, wobei beide Werte in einem Feedback-Loop 19 der Ansteuereinheit 60 zugeführt werden. Der Schätzer 21 arbeitet bevorzugt mit linearen Schätzmethoden (Kalman, Luenberger) mit Reibungskompensation, wobei der nicht lineare Teil, also das Reibungsmodell, des Modells als Kompensationsglied ausgeführt wird. Vorzugsweise ist das Reibmodell ein asymmetrisches, modifiziertes dynamisches Reibmodell, insbesondere ein Lund-Grenoble Reibmodell. Es kann sich aber auch um ein asymmetrisches, modifiziertes statisches Reibmodell handeln, wobei das Reibmodell Coulombsche Reibung, viskose Reibung und/oder Stribeck-Reibung beinhaltet.

Figur 6 zeigt eine zweite Ausführungsform eines Moduls zur lenkgetriebemodellbasierten Schätzung der Zahnstangenkraft 16 mit einer modellbasierten Schätzung der Zahnstangenkraft. Wie im vorherigen Ausführungsbeispiel empfängt die Ansteuereinheit 60 von einer Einheit 18 Soll-Zahnstangenwerte als Input. Diese umfassen die Soll-Zahnstangenposition s_{r,des}, die Soll-Zahnstangengeschwindigkeit v_{r,des} und die Soll-Zahnstangenbeschleunigung a_{r, des}. Die Ansteuereinheit 60 bestimmt aus dem Input s_{r,des} und v_{r,des}, ein Soll-Drehmoment T_{in,des} für die Ansteuerung des Lenkgetriebes 8.. Die Ist-Zahnstangenposition s_{r,meas} und die Ist-Zahnstangengeschwindigkeit v_{r,meas} werden gemessen und als Input für einen Schätzer 23 verwendet. Aus dem Soll-Drehmoment T_{in,des} wird eine Soll-Zahnstangenkraft F_{in,des} bestimmt und diese wird dem Schätzer 23 mit den gemessenen Zahnstangenwerten, der Zahnstangenposition s_{r,meas} und der Zahnstangengeschwindigkeit v_{r,meas}, zugeführt. Der Schätzer 23 beinhaltet das komplette Lenkgetriebemodell inklusive Reibmodell 24. Der Schätzer 23 kann dabei nicht-lineare Schätzmethoden mit beispielsweise Extended Kalman Filter (EKF), Unscented Kalman Filter (UKF) oder dergleichen verwenden. Der Schätzer 23 bestimmt die reibungsabhängige lenkgetriebemodellbasierte Zahnstangenkraft F_{r,estrack}, die nach Durchlaufen einer Verzögerungseinheit 25 in einem Feedback-Loop 26 an den Schätzer 23 als Input zurückgegeben wird. Vorzugsweise ist das Reibmodell 24 ein asymmetrisches, modifiziertes dynamisches Reibmodell, insbesondere ein Lund-Grenoble Reibmodell. Es kann sich aber auch um ein asymmetrisches, modifiziertes statisches Reibmodell handeln, wobei das Reibmodell Coulombsche Reibung, viskose Reibung und/oder Stribeck-Reibung beinhaltet. Der Schätzer 23 bestimmt weiterhin eine geschätzte Zahnstangenposition s_{r,est} und eine geschätzte Zahnstangengeschwindigkeit v_{r,est}, welche in einem Feedback-Loop 19 an die Ansteuereinheit 60 zurückgeführt werden.

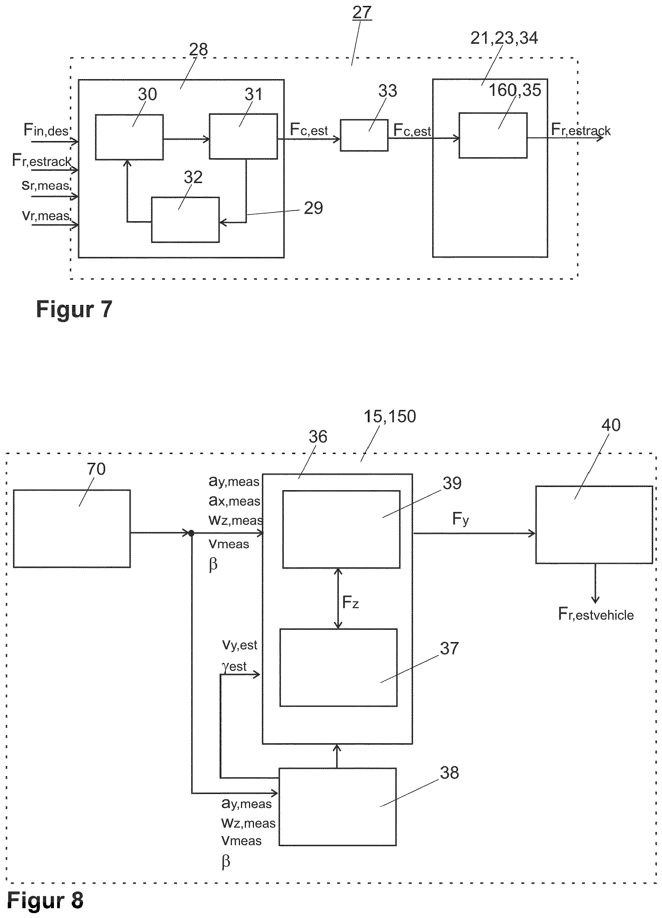

Figur 7 zeigt eine modellbasierte Parameterschätzung 27, die eine adaptive Schätzung der reibungsabhängigen lenkgetriebemodellbasierten Zahnstangenkraft F_{r,estrack} ermöglicht. Das Reibungsverhalten des Lenkgetriebes wird online ermittelt, d. h. das Modell wird aktualisiert und die Schätzung der Zahnstangenkraft ist somit unabhängig von mechanischen Veränderungen des Lenkgetriebes. Durch diese adaptive Schätzung wird eine sehr hohe Genauigkeit über die gesamte Lebensdauer des Lenkgetriebes erreicht. Die aus den gemessenen Zahnstangenwerten bestimmte gemessene Ist-Zahnstangenposition s_{r,meas}, die Ist-Zahnstangengeschwindigkeit v_{r,meas} sowie die Soll-Zahnstangenkraft F_{in,des} und die geschätzte Zahnstangenkraft F_{r,estrack} werden an einen zur Reibungsbestimmung vorgesehenen Schätzer 28 als Input weitergegeben. Dieser Schätzer 28 schätzt Reibungsparameter F_{c,est}, wie beispielsweise eine asymmetrische Haftreibung und aktualisiert die Reibungswerte online mittels eines Feedback-Loops 29. In einem ersten Schritt wird das Reibungsverhalten online ermittelt 30 und anschließend ein gleitender Durchschnitt gebildet 31, der wiederrum als neuer Parameter zwischengespeichert wird 32 und als Input der Reibungsbestimmung übermittelt wird. Eine Auswerteeinheit 33 stellt fest, ob eine Änderung der Reibungsparameter F_{c,est} vorliegt und leitet den aktualisierten Wert als Input an einen lenkgetriebemodellbasierten Schätzer 21, 23, 34 weiter. Der lenkgetriebemodellbasierte Schätzer 21, 23, 34 schätzt mittels eines Lenkgetriebemodells 160, 35 und anhand des aktualisierten Werts F_{c,est} eine reibungsabhängige lenkgetriebemodellbasierte Zahnstangenkraft F_{r,estrack}. Die adaptive Schätzung verwendet nichtlineare Schätzmethoden, mit beispielsweise einem EKF und wird bei sehr geringen Reibwerten <=0 für die lenkgetriebemodellbasierte Schätzung der Zahnstangenkraft implementiert.

In der Figur 8 ist eine bevorzugte Ausführungsform eines Moduls zur fahrzeugmodellbasierten Schätzung 15 schematisch dargestellt. Das Modul weist ein nichtlineares Fahrzeugmodell 150 mit einem Einspurmodell 36 mit einem nichtlinearen Reifenmodell 37 auf. Einspurmodelle ermitteln auf die Reifen wirkende Seitenkräfte oder auf die dazugehörige Achse in Abhängigkeit von einem Schräglaufwinkel der Räder und sind aus dem Stand der Technik bekannt. Die gemessenen Fahrzeugzustände 70, eine laterale Beschleunigung a_{x,meas} und eine longitudinale Beschleunigung a_{y,meas}, die Drehung um die Hochachse oder Gierachse w_{z,meas}, die Fahrzeuggeschwindigkeit vₘₑₐₛ und der Lenkwinkel β an den Rädern 7, dienen als Input für das Einspurmodell 36. Die laterale Beschleunigung a_{y,meas,} die Drehung um die Gierachse w_{z,meas}, die Fahrzeuggeschwindigkeit vₘₑₐₛ und der Radlenkwinkel β dienen als Input für einen Schätzer 38, der die nicht messbaren Zustände, d. h. die laterale Geschwindigkeit v_{y,meas} und den lateralen Reifenschlupfwinkel γₑₛₜ mit Hilfe eines Kalman Filters (EKF/UKF) schätzt. Die geschätzten Werte fließen in das Einspurmodell 36 ein. Das Einspurmodell 36 umfasst ein Reifenlastmodell 39 und das Reifenmodell 37, anhand derer die laterale Reifenkraft F_{y} mit Berücksichtigung der Rückstellmomente bestimmt wird. Mit Hilfe der Lenkgeometrie des Lenkgetriebes 40 wird daraus wiederrum die fahrzeugmodellbasierte Zahnstangenkraft F_{r,estvehicle} abgeleitet.

Durch die in Figur 3 und Figur 4 dargestellten Kombinationen der beiden Methoden, fahrzeugmodellbasierte Schätzung und lenkgetriebemodellbasierte Schätzung, können die Schwächen der einzelnen Methoden kompensiert werden.

Die Gewichtung der beiden Methoden erfolgt dabei in Abhängigkeit der Fahrbedingungen. Es handelt sich bevorzugt um eine Kalman basierte Fusion beider Methoden (EKF, UKF). Die einzelnen Schätzergebnisse werden je nach Fahrbedingungen über Kovarianzmatrizen gewichtet. Bei definierten Fahrbedingungen unterstützt die lenkgetriebemodellbasierte Schätzung die fahrzeugmodellbasierte Schätzung. Die Zahnstangenkräfte beispielsweise innerhalb des Haftreibungsbandes des Lenkgetriebes können dadurch besser geschätzt werden. Da das Fahrzeugmodell nur bei trockenem Asphalt gültig ist, ist auch die fahrzeugmodellbasierte Schätzung der Zahnstangenkraft nur bei trockenem Asphalt gültig. Durch Differenzbildung zwischen der lenkgetriebemodellbasierten Zahnstangenkraft und der fahrzeugmodellbasierten Zahnstangenkraft kann der Reibungskoeffizient µ der Straße ermittelt werden. Wird dieser Koeffizient der fahrzeugmodellbasierten Schätzung zurückgeführt, so ist die Schätzung dieser Methode ebenfalls genau und unabhängig von den aktuellen Straßenbedingungen.

## Patentansprüche

1. Verfahren zur Bestimmung einer Zahnstangenkraft (F_{r,estcomplrack}) für ein Steer-by-Wire-Lenksystem (1) für ein Kraftfahrzeug, wobei die Zahnstangenkraft (F_{r,estcomplrack}) aus zwei Komponenten ermittelt wird, **dadurch gekennzeichnet, dass** in einem Modul (15) zur fahrzeugmodellbasierten Schätzung der Zahnstangenkraft mittels eines Fahrzeugmodells eine erste Komponente der Zahnstangenkraft (F_{r,estvehicle}) erzeugt wird und dass in einem Modul (16) zur lenkgetriebemodellbasierten Schätzung der Zahnstangenkraft mittels eines Lenkgetriebemodells eine zweite Komponente der Zahnstangenkraft (F_{r,estrack}) erzeugt wird.

2. Verfahren nach Anspruch 1, **dadurch gekennzeichnet, dass** die beiden Komponenten der Zahnstangenkraft (F_{r,estvehicle}, F_{r,estrack}) zu einer Zahnstangenkraft (F_{r,estcomplrack}) kombiniert und gewichtet werden, wobei die Gewichtung der beiden Komponenten in Abhängigkeit von Fahrbedingungen erfolgt.

3. Verfahren nach Anspruch 1 oder 2, **dadurch gekennzeichnet, dass** die Gewichtung über Kovarianzmatrizen erfolgt.

4. Verfahren nach einem der vorhergehenden Ansprüche, **dadurch gekennzeichnet, dass** das Modul (15) zur fahrzeugmodellbasierten Schätzung der Zahnstangenkraft ein nichtlineares Fahrzeugmodell (150) aufweist.

5. Verfahren nach Anspruch 4, **dadurch gekennzeichnet, dass** das Modul (15) zur fahrzeugmodellbasierten Schätzung der Zahnstangenkraft einen Schätzer (38) aufweist, der nicht messbare Zustände mit Hilfe eines Kalman Filters schätzt.

6. Verfahren nach Anspruch 4 oder 5, **dadurch gekennzeichnet, dass** das nicht lineare Fahrzeugmodell (150) ein lineares Einspurmodell (36) mit einem Reifenlastmodell (39) und einem nichtlinearen Reifenmodell (37) umfasst, anhand derer die laterale Reifenkraft (F_{y}) unter Berücksichtigung von Rückstellmomenten bestimmt wird.

7. Verfahren nach einem der vorhergehenden Ansprüche, **dadurch gekennzeichnet, dass** das Modul zur (16) lenkgetriebemodellbasierten Schätzung der Zahnstangenkraft ein nichtlineares Lenkgetriebemodell mit einer separaten Reibungsmodellierung (20) aufweist, wobei mittels eines Schätzers (21) die reibungsabhängige lenkgetriebemodellbasierte Zahnstangenkraft (F_{r,estrack}) ermittelt wird.

8. Verfahren nach einem der vorhergehenden Ansprüche, **dadurch gekennzeichnet, dass** ein Schätzer (23) mit nichtlinearen Schätzmethoden arbeitet und/oder das Reibmodell der Reibungsmodellierung (24) ein asymmetrisches, modifiziertes dynamisches Reibmodell, insbesondere ein Lund-Grenoble Reibmodell ist.

9. Verfahren nach Anspruch 7 oder 8, **dadurch gekennzeichnet, dass** der Schätzer (21, 23) auf einem linearen Kalman Filter mit Reibungskompensation basiert, wobei der nicht lineare Teil des Modells als Kompensationsglied ausgeführt wird.

10. Verfahren nach einem der vorhergehenden Ansprüche 1 bis 3, **dadurch gekennzeichnet, dass** das Modul (16) zur lenkgetriebemodellbasierten Schätzung der Zahnstangenkraft eine modellbasierte Parameterschätzung (27) aufweist, wobei das Reibungsverhalten des Lenkgetriebes online ermittelt wird, was eine adaptive Schätzung der reibungsabhängigen lenkgetriebemodellbasierte Zahnstangenkraft (F_{r,estrack}) ermöglicht.

11. Verfahren zur Steuerung eines Steer-by-Wire-Lenksystems für ein Kraftfahrzeug umfassend:
- einen auf die gelenkten Räder (7) wirkenden elektronisch regelbaren Lenksteller (6),
- eine Ansteuereinheit (60),
- einen Feedback-Aktuator (4), der über ein Lenkeingabemittel (3) von einem Fahrer mit einem Fahrerwunsch für einen Lenkwinkel beaufschlagt werden kann und ein Feedback-Signal an das Lenkeingabemittel als Reaktion auf den Fahrerwunsch und einen Fahrzustand des Kraftfahrzeugs ausgibt,
- eine Signalübertragung, die den Fahrerwunsch an die Ansteuereinheit (60) übermittelt,
- wobei die Ansteuereinheit (60) den Lenksteller (6) ansteuert, um den Fahrerwunsch in eine Auslenkung der gelenkten Räder (7) zu transformieren,
- und wobei das Feedback-Signal in Abhängigkeit einer geschätzten Zahnstangenkraft (F_{r,estcomplrack}) erfolgt, **dadurch gekennzeichnet, dass** die Zahnstangenkraft (F_{r,estcomplrack}) mittels eines Verfahrens nach einem der Ansprüche 1 bis 11 geschätzt wird.

12. Verfahren nach Anspruch 11, **dadurch gekennzeichnet, dass** aus der Differenz der lenkgetriebemodellbasierten Zahnstangenkraft (F_{r,estrack}) und der fahrzeugmodellbasierten Zahnstangenkraft (F_{r,estvehicle}) die Straßenreibung (µ) bestimmt wird, die als Input für das Modul (15) zur fahrzeugmodellbasierten Schätzung der Zahnstangenkraft verwendet wird.

13. Steer-by-Wire-Lenksystem (1) für ein Kraftfahrzeug umfassend:
- einen auf die gelenkten Räder (7) wirkenden elektronisch regelbaren Lenksteller (6),
- eine Ansteuereinheit (60),
- einen Feedback-Aktuator (4), der über ein Lenkeingabemittel (3) von einem Fahrer mit einem Fahrerwunsch für einen Lenkwinkel beaufschlagt werden kann und ein Feedback-Signal an das Lenkeingabemittel als Reaktion auf den Fahrerwunsch und einen Fahrzustand des Kraftfahrzeugs ausgibt,
- eine Einrichtung zur Signalübertragung, die den Fahrerwunsch an die Ansteuereinheit (60) übermittelt,
- wobei die Ansteuereinheit (60) den Lenksteller (6) ansteuert, um den Fahrerwunsch in eine Auslenkung der gelenkten Räder (7) zu transformieren, **dadurch gekennzeichnet, dass**
das Steer-by-Wire-Lenksystem (1) dazu eingerichtet ist, ein Verfahren nach einem der Ansprüche 1 bis 12 auszuführen.

## Claims

1. A method for determining a toothed-rack force (F_{r,estcomplrack}) for a steer-by-wire steering system (1) for a motor vehicle, wherein the toothed-rack force (F_{r,estcomplrack}) is determined from two components, **characterized in that**, in a module (15) for vehicle-model-based estimation of the toothed-rack force, a first component of the toothed-rack force (F_{r,estvehicle}) is generated by means of a vehicle model, and **in that**, in a module (16) for steering-gear-model-based estimation of the toothed-rack force, a second component of the toothed-rack force (F_{r,estrack}) is generated by means of a steering gear model.

2. The method as claimed in claim 1, **characterized in that** the two components of the toothed-rack force (F_{r,estvehicle}, F_{r,estrack}) are combined and weighted to form a toothed-rack force (F_{r,estcomplrack}), wherein the weighting of the two components is performed in a manner dependent on driving conditions.

3. The method as claimed in claim 1 or 2, **characterized in that** the weighting is performed by means of covariance matrices.

4. The method as claimed in any of the preceding claims, **characterized in that** the module (15) for vehicle-model-based estimation of the toothed-rack force comprises a non-linear vehicle model (150).

5. The method as claimed in claim 4, **characterized in that** the module (15) for vehicle-model-based estimation of the toothed-rack force comprises an estimator (38) which estimates non-measurable states by means of a Kalman filter.

6. The method as claimed in claim 4 or 5, **characterized in that** the non-linear vehicle model (150) comprises a linear single-track model (36) with a tire load model (39) and with a non-linear tire model (37), on the basis of which the lateral tire force (F_{y}) is determined taking into consideration self-aligning moments.

7. The method as claimed in any of the preceding claims, **characterized in that** the module (16) for steering-gear-model-based estimation of the toothed-rack force comprises a non-linear steering gear model with a separate friction modelling means (20), wherein the friction-dependent steering-gear-model-based toothed-rack force (F_{r,estrack}) is ascertained by means of an estimator (21).

8. The method as claimed in any of the preceding claims, **characterized in that** an estimator (23) operates with non-linear estimation methods, and/or the friction model of the friction modelling means (24) is an asymmetrical, modified dynamic friction model, in particular a Lund-Grenoble friction model.

9. The method as claimed in claim 7 or 8, **characterized in that** the estimator (21, 23) is based on a linear Kalman filter with friction compensation, wherein the non-linear part of the model is implemented as a compensation element.

10. The method as claimed in any of the preceding claims 1 to 3, **characterized in that** the module (16) for steering-gear-model-based estimation of the toothed-rack force comprises model-based parameter estimation (27), wherein the friction characteristics of the steering gear are determined online, which permits an adaptive estimation of the friction-dependent steering-gear-model-based toothed-rack force (F_{r,estrack}).

11. A method for controlling a steer-by-wire steering system for a motor vehicle, comprising:
- an electronically controllable steering actuator (6) which acts on the steered wheels (7),
- a control unit (60),
- a feedback actuator (4) to which a driver demand for a steering angle can be applied by a driver by way of a steering input means (3) and which outputs a feedback signal to the steering input means in reaction to the driver demand and to a driving state of the motor vehicle,
- a signal transmission means which transmits the driver demand to the control unit (60),
- wherein the control unit (60) controls the steering actuator (6) in order to transform the driver demand into a deflection of the steered wheels (7),
- and wherein the feedback signal is implemented in a manner dependent on an estimated toothed-rack force (F_{r,estcomplrack}), **characterized in that** the toothed-rack force (F_{r,estcomplrack}) is estimated by means of a method as claimed in any of claims 1 to 11.

12. The method as claimed in claim 11, **characterized in that**, from the difference between the steering-gear-model-based toothed-rack force (F_{r,estrack}) and the vehicle-model-based toothed-rack force (F_{r,estvehicle}), the road friction (µ) is determined, which is used as an input for the module (15) for vehicle-model-based estimation of the toothed-rack force.

13. A steer-by-wire steering system (1) for a motor vehicle, comprising:
- an electronically controllable steering actuator (6) which acts on the steered wheels (7),
- a control unit (60),
- a feedback actuator (4) to which a driver demand for a steering angle can be applied by a driver by way of a steering input means (3) and which outputs a feedback signal to the steering input means in reaction to the driver demand and to a driving state of the motor vehicle,
- a signal transmission means which transmits the driver demand to the control unit (60),
- wherein the control unit (60) controls the steering actuator (6) in order to transform the driver demand into a deflection of the steered wheels (7), **characterized in that**
the steer-by-wire steering system (1) is configured to carry out a method as claimed in any of claims 1 to 12.

## Revendications

1. Procédé permettant de déterminer une force de crémaillère (F_{r,estcomplrack}) pour un système de direction de type « steer-by-wire » (1) destiné à un véhicule automobile, la force de crémaillère (F_{r,estcomplrack}) étant établie à partir de deux composantes,
**caractérisé en ce que** dans un module (15) destiné à l'estimation, basée sur un modèle de véhicule, de la force de crémaillère au moyen d'un modèle de véhicule, une première composante de la force de crémaillère (F_{r,estvehicle}) est générée, et **en ce que** dans un module (16) destiné à l'estimation, basée sur un modèle de mécanisme de direction, de la force de crémaillère au moyen d'un modèle de mécanisme de direction, une deuxième composante de la force de crémaillère (F_{r,estrack}) est générée.

2. Procédé selon la revendication 1, **caractérisé en ce que** les deux composantes de la force de crémaillère (F_{r,estvehicle}, F_{r,estrack}) sont combinées en une force de crémaillère (F_{r,estcomplrack}) et pondérées, la pondération des deux composantes étant effectuée en fonction des conditions de conduite.

3. Procédé selon la revendication 1 ou 2, **caractérisé en ce que** la pondération est effectuée par le biais de matrices de covariance.

4. Procédé selon l'une quelconque des revendications précédentes, **caractérisé en ce que** le module (15) destiné à l'estimation, basée sur un modèle de véhicule, de la force de crémaillère présente un modèle de véhicule non linéaire (150).

5. Procédé selon la revendication 4, **caractérisé en ce que** le module (15) destiné à l'estimation, basée sur un modèle de véhicule, de la force de crémaillère présente un estimateur (38) qui estime des états non mesurables à l'aide d'un filtre de Kalman.

6. Procédé selon la revendication 4 ou 5, **caractérisé en ce que** le modèle de véhicule (150) non linéaire comprend un modèle à une voie (36) doté d'un modèle de charge de pneu (39) et d'un modèle de pneu non linéaire (37) à l'aide desquels la force de pneu latérale (F_{y}) est déterminée en tenant compte de moments de rappel.

7. Procédé selon l'une quelconque des revendications précédentes, **caractérisé en ce que** le module (16) destiné à l'estimation, basée sur un modèle de mécanisme de direction, de la force de crémaillère présente un modèle de mécanisme de direction non linéaire doté d'une modélisation de frottement distincte (20), un estimateur (21) permettant d'établir la force de crémaillère (F_{r,estrack}) basée sur un modèle de mécanisme de direction en fonction du frottement.

8. Procédé selon l'une quelconque des revendications précédentes, **caractérisé en ce qu'**un estimateur (23) fonctionne avec des méthodes d'estimation non linéaires, et/ou le modèle de frottement de la modélisation de frottement (24) est un modèle de frottement dynamique modifié, asymétrique, en particulier un modèle de frottement de Lund-Grenoble.

9. Procédé selon la revendication 7 ou 8, **caractérisé en ce que** l'estimateur (21, 23) est basé sur un filtre de Kalman linéaire à compensation de frottement, la partie non linéaire du modèle étant effectuée sous forme d'élément de compensation.

10. Procédé selon l'une quelconque des revendications précédentes 1 à 3, **caractérisé en ce que** le module (16) destiné à l'estimation, basée sur un modèle de mécanisme de direction, de la force de crémaillère présente une estimation de paramètre basée sur un modèle (27), le comportement de frottement du mécanisme de direction étant établi en ligne ce qui permet une estimation adaptative de la force de crémaillère (F_{r,estrack}) basée sur un modèle de mécanisme de direction en fonction du frottement.

11. Procédé de commande d'un système de direction de type « steer-by-wire » pour un véhicule automobile, comprenant :
- un régulateur de direction (6) à régulation électronique, agissant sur les roues directrices (7),
- une unité de pilotage (60),
- un actionneur à rétroaction (4) qui peut être soumis par le biais d'un moyen d'entrée de direction (3) par un conducteur à un souhait de conducteur concernant un angle de braquage et délivre un signal de rétroaction au moyen d'entrée de direction en réponse au souhait de conducteur et à un état de conduite du véhicule automobile,
- une transmission de signal qui transmet le souhait de conducteur à l'unité de pilotage (60),
- l'unité de pilotage (60) pilotant le régulateur de direction (6) pour transformer le souhait de conducteur en une déviation des roues directrices (7),
- et dans lequel le signal de rétroaction a lieu en fonction d'une force de crémaillère (F_{r,estcomplrack}) estimée,
**caractérisé en ce que** la force de crémaillère (F_{r,estcomplrack}) est estimée au moyen d'un procédé selon l'une quelconque des revendications 1 à 11.

12. Procédé selon la revendication 11, **caractérisé en ce qu'**à partir de la différence de la force de crémaillère (F_{r,estrack}) basée sur un modèle de mécanisme de direction et de la force de crémaillère (F_{r,estvehicle}) basée sur un modèle de véhicule, le frottement sur la route (µ) est déterminé, qui est utilisé comme entrée pour le module (15) pour l'estimation, basée sur un modèle de véhicule, de la force de crémaillère.

13. Système de direction de type « steer-by-wire » (1) pour un véhicule automobile, comprenant :
- un régulateur de direction (6) à régulation électronique, agissant sur les roues directrices (7),
- une unité de pilotage (60),
- un actionneur à rétroaction (4) qui peut être soumis par le biais d'un moyen d'entrée de direction (3) par un conducteur à un souhait de conducteur concernant un angle de braquage et délivre un signal de rétroaction au moyen d'entrée de direction en réponse au souhait de conducteur et à un état de conduite du véhicule automobile,
- un dispositif de transmission de signal qui transmet le souhait de conducteur à l'unité de pilotage (60),
- l'unité de pilotage (60) pilotant le régulateur de direction (6) pour transformer le souhait de conducteur en une déviation des roues directrices (7),
**caractérisé en ce que** le système de direction de type « steer-by-wire » (1) est aménagé pour exécuter un procédé selon l'une quelconque des revendications 1 à 12.
